# EUROPEAN PATENT APPLICATION

(11) **EP 2 037 112 A1**
(43) Date of publication of application: **18.03.2009**
(21) Application number: 07744393.5
(22) Date of filing: 30.05.2007
(51) Int. Cl.: F02D 45/00, B60K 15/077, F02D 29/00, F02D 29/02, F02D 35/00

(54) **FUEL NATURE DISCRIMINATING SYSTEM FOR WORKING MACHINES, AND FUEL NATURE DISCRIMINATING METHOD FOR WORKING MACHINES**

(30) Priority: 30.06.2006 JP 2006180842
(71) Applicant: Komatsu, Ltd., Minato-ku Tokyo 107-8414 (JP)
(72) Inventor: ARAKAWA, Shuji, Hiratsuka-shi, Kanagawa 254-0014 (JP); KOIZUMI, Hidenori, Hiratsuka-shi, Kanagawa 254-0913 (JP)
(74) Representative: Puschmann, Heinz H.
(86) International application number: PCT/JP2007/060980
(87) International publication number: WO 2008/001574

(57) **Abstract**

The fuel nature discriminating system of the present invention discriminates whether or not a fuel fed to a working machine is the normal one, and performs appropriate control operation by analyzing the result of discrimination. The fuel fed from a fuel supply nozzle flows into a fuel tank through a fuel catching portion. Fuel nature detecting means measures the nature of the fed fuel at a predetermined timing (or at the time of refueling). Measured data generating means generates measured data on the basis of the measurement result and also the remaining amount of fuel and the environmental temperature. And, in accordance with the result of analysis of the measured data, a measured data analyzing means executes restriction of the engine output, issues a warning to the user, and alteration of an evaluation of the user.

## Description

The present invention relates to a system and a method for discriminating the nature of a fuel for a working machine.

As working machines, for example, there are known various type of working machines such as oil pressure shovels and wheel loaders and the like, and haulage vehicles such as dump trucks and the like. With these working machines, in order to reduce the cost, they are equipped with diesel engines, and diesel oil is used as the fuel. Although most users of working machines use normal diesel oil, the unauthorized use sometimes occurs of some other fuel such as kerosene or the like, which is mixed into the diesel oil. This is because kerosene and the like is cheaper in price than diesel oil.

However since, in recent years, it is a strong requirement upon companies to cope with environmental problems, accordingly working machine makers and the like are designing the main portions of diesel engines in order to control them on a sophisticated level, so as further to reduce the influence upon the environment. This type of sophisticated engine control assumes that normal diesel oil is being used as the fuel. Accordingly, in the case of use of an inferior fuel which includes kerosene or other impurities and in which the amount of oil included is lower as compared to diesel oil, not only does it become impossible to obtain the rated engine performance, but damage may be done to the fuel injection system of the engine or the like, and there is a possibility that the life of the engine may be decreased.

Thus techniques have been proposed for discriminating the nature of the fuel. As a first such prior art technique, a method is per se known (see Japanese Laid-Open Patent Publication 2004-219269) of discriminating whether or not normal diesel oil is being used, on the basis of the amount of sulfur oxide included in the exhaust gases of the engine. And, as a second such prior art technique, a technique is per se known (see Japanese Laid-Open Utility Model Publication 2-20146) of discriminating whether the fuel is diesel oil or kerosene, on the basis of the differences in specific gravity between diesel oil and kerosene.

While these prior art techniques described in these documents propose testing methods for discriminating between diesel oil and kerosene, they do not consider at all the question of how the results of discrimination should be employed. Due to this, with these prior art techniques, it is not possible to obstruct improper action by a user of a working machine who is using inferior fuel, and it is not possible to prevent increase of contaminants in the engine gases or decrease in the life of the engine.

The present invention has been conceived in consideration of the problems described above, and an object thereof is to provide a fuel nature discriminating system for a working machine, and a fuel nature discriminating method, which can discriminate whether or not some fuel other than a predetermined fuel is being used, and can output control information based upon the result of that discrimination. Another object of the present invention is to provide a fuel nature discriminating system for a working machine, and a fuel nature discriminating method, which can discriminate whether or not a predetermined fuel is being used at the moment of refueling the fuel tank, and with which it is possible to arrange for control of the operational state of the working machine on the basis of the result of that discrimination. Yet another object of the prevent invention is to provide a fuel nature discriminating system for a working machine, and a fuel nature discriminating method, with which it is possible to arrange for updating of evaluation related to the working machine, on the basis of the result of discrimination as to whether or not a predetermined fuel is being used. Even further objects of the present invention will become clear from the following description of embodiments thereof.

A fuel nature discriminating system for a working machine according to one aspect of the present invention is a fuel nature discriminating system which discriminates the nature of fuel supplied to an engine of a working machine, comprising: a fuel nature detecting means which detects the nature of fuel supplied into a fuel tank, and outputs a detection signal; a discriminating means which discriminates whether or not fuel which has been supplied into the fuel tank is a predetermined fuel which is set in advance, on the basis of the detection signal from the fuel nature detecting means; and a control information output means which outputs control information on the basis of the result of discrimination by the discriminating means.

In a preferred embodiment, the fuel nature detecting means is provided in the vicinity of a fuel supply aperture of the fuel tank; and the discriminating means discriminates whether the fuel supplied into the fuel tank is the predetermined fuel or not, on the basis of a detection signal outputted from the fuel nature detecting means at a time of fuel supply into the fuel tank.

In a preferred embodiment, a fuel stagnation unit is provided within the fuel tank for temporarily storing a portion of the fuel supplied into the fuel tank; the fuel nature detecting means is provided in the vicinity of the fuel stagnation unit; and the discriminating means discriminates whether or not the fuel supplied into the fuel tank is the predetermined fuel or not, on the basis of a detection signal outputted from the fuel nature detecting means either at the moment of refueling the fuel tank, or directly after refueling has ended.

In a preferred embodiment, the fuel nature detecting means is provided partway along a fuel supply path which supplies fuel from the fuel tank to the engine; and the discriminating means discriminates whether or not the fuel supplied into the fuel tank is the predetermined fuel or not, on the basis of a detection signal outputted from the fuel nature detecting means when the engine is started, or when the amount of fuel remaining in the fuel tank is increased.

In a preferred embodiment, if it has been decided by the discriminating means that the fuel is not the predetermined fuel, the control information output means outputs one or both of warning information, and operational state restriction information for restricting the operational state of the working machine.

In a preferred embodiment, the operational state restriction information is information which restricts the engine rotational speed of the engine.

In a preferred embodiment, the operational state restriction information is information which restricts the operation of a working device possessed by the working machine.

And a fuel nature discriminating system for a working machine according to another aspect of the present invention is a fuel nature discriminating system for a working machine, comprising a plurality of working machines and a management device which are connected together via a communication network so as to be capable of mutual communication, wherein: each of the working machines comprises: a fuel tank which supplies fuel to an engine; a fuel nature detecting means which detects the nature of fuel supplied into the fuel tank, and outputs a detection signal; a measured data generating means which generates measured data on the basis of the detection signal from the fuel nature detecting means; a data transmission means which transmits the measured data which has been generated to the management device; and an operational state restriction means which restricts the operation of the working machine or issues a warning, on the basis of control information received from the management device; and the management device comprises: a reception means which receives the measured data transmitted from the data transmission means; a discriminating means which discriminates whether or not fuel which has been supplied into the fuel tank is a predetermined fuel which is set in advance, on the basis of the measured data; and a control information transmission means which transmits the control information to the working machine, on the basis of the result of discrimination by the discriminating means.

A fuel nature discriminating system for a working machine according to yet another aspect of the present invention is a fuel nature discriminating system for a working machine, comprising a plurality of working machines and a management device which are connected together via a communication network so as to be capable of mutual communication, wherein: each of the working machines comprises: a fuel tank which supplies fuel to an engine; a fuel nature detecting means which detects the nature of fuel supplied into the fuel tank, and outputs a detection signal; a discriminating means which discriminates whether or not fuel which has been supplied into the fuel tank is a predetermined fuel which is set in advance, on the basis of the detection signal from the fuel nature detecting means; a warning means which restricts the operation of the working machine or issues a warning, if it has been decided by the discriminating means that the fuel supplied into the fuel tank is not the predetermined fuel; and a result of discrimination transmission means which transmits the result of discrimination by the discriminating means to the management device; and the management device comprises: a reception means which receives the result of discrimination transmitted from the data transmission means; and a storage means which accumulates in a database the results of discrimination which have been received by the reception means.

In a preferred embodiment, the management device further comprises a database for managing the user or the user of each of the working machines, and an evaluation updating means which updates evaluations, provided within the database and related to the fuels which are used, on the basis of the results of discrimination.

A fuel nature discriminating system for a working machine according to still another aspect of the present invention is a fuel nature discriminating system which discriminates the nature of fuel supplied to an engine of a working machine, comprising: the working machine; a fuel tank which supplies fuel to the engine; a fuel nature detecting means which detects the nature of fuel supplied into the fuel tank, and outputs a detection signal; a remaining amount of fuel detecting means which detects the amount of fuel remaining within the fuel tank, and outputs a detection signal; and a supplied amount calculation means which, if it has been decided by the fuel nature detecting means that fuel which has been supplied into the fuel tank is not a predetermined fuel which has been set in advance, calculates and compares together the remaining amount of fuel before fuel supply and the remaining amount of fuel after fuel supply on the basis of the detection signal from the remaining amount of fuel detecting means, and calculates the amount of fuel which has been supplied.

A fuel nature discriminating system for a working machine according to yet another aspect of the present invention is a fuel nature discriminating system for a working machine, comprising a plurality of working machines and a management device which are connected together via a communication network so as to be capable of mutual communication, wherein: each of the working machines comprises: a fuel tank which supplies fuel to an engine; a fuel nature detecting means which detects the nature of fuel supplied into the fuel tank, and outputs a detection signal; a remaining amount of fuel detecting means which detects the amount of fuel remaining within the fuel tank, and outputs a detection signal; and a supplied amount calculation means which, if it has been decided by the fuel nature detecting means that fuel which has been supplied into the fuel tank is not a predetermined fuel which has been set in advance, calculates and compares together the remaining amount of fuel before fuel supply and the remaining amount of fuel after fuel supply on the basis of the detection signal from the remaining amount of fuel detecting means, and calculates the amount of fuel which has been supplied; and a transmission means which transmits the supplied fuel amount calculated by the supplied amount calculation means to the management device; and the management device comprises: a reception means which receives the supplied fuel amount transmitted from each of the working machines; a database for managing the user or the operator of each of the working machines; and an evaluation updating means which updates evaluations, provided within the database and related to the fuels which are used, on the basis of the results of discrimination.

A fuel nature discriminating system for a working machine according to even another aspect of the present invention is a fuel nature discriminating system for a working machine, comprising a working machine and a management device which are connected together via a communication network so as to be capable of mutual communication, wherein: the working machine comprises: a fuel tank which supplies fuel to an engine; a fuel nature detecting means which detects the nature of fuel supplied into the fuel tank, and outputs a detection signal; a remaining amount of fuel detecting means which detects the amount of fuel remaining within the fuel tank, and outputs a detection signal; a measured data generating means which generates measured data on the basis of the detection signal from the fuel nature detecting means and the detection signal from the remaining amount of fuel detecting means; a data transmission means which transmits the measured data which has been generated to the management device; and a working machine operation restriction means which restricts the operation of the working machine, on the basis of control information received from the management device; and the management device comprises: a reception means which receives the measured data transmitted from the data transmission means; a discriminating means which discriminates whether or not fuel which has been supplied into the fuel tank is a predetermined fuel which is set in advance, on the basis of the measured data; and a transmission control means which transmits the control information to the working machine, on the basis of the result of discrimination by the discriminating means.

A fuel nature discriminating system for a working machine according to still yet another aspect of the present invention is a fuel nature discriminating system for a working machine, comprising a working machine and a management device which are connected together via a communication network so as to be capable of mutual communication, wherein: the working machine comprises: a fuel tank which supplies fuel to an engine; a fuel nature detecting means which detects the nature of fuel supplied into the fuel tank, and outputs a detection signal; a remaining amount of fuel detecting means which detects the amount of fuel remaining within the fuel tank, and outputs a detection signal; a discriminating means which discriminates whether or not fuel which has been supplied into the fuel tank is a predetermined fuel which is set in advance, on the basis of the detection signal from the fuel nature detecting means and the detection signal from the remaining amount of fuel detecting means; a warning means which issues a warning, if it has been decided by the discriminating means that the fuel supplied into the fuel tank is not the predetermined fuel; and a result of discrimination transmission means which transmits the result of discrimination by the discriminating means to the management device; and the management device comprises: a reception means which receives the result of discrimination transmitted from the result of discrimination transmission means; and a transmission control means which, if the proportion of the fuel other than the predetermined fuel, included in the remaining amount of fuel within the fuel tank, is greater than a predetermined value, transmits control information to the working machine for restricting the output of the engine.

In a preferred embodiment, there is further included a user evaluation updating means which updates an evaluation relating to the user of the working machine, on the basis of the discrimination result.

In a preferred embodiment, there is further included an anomaly detecting means which detects the occurrence of an anomaly condition, if no detection signal which indicates the existence of the fuel is outputted from the fuel nature detecting means even though the remaining amount of fuel within the fuel tank is increased.

And a fuel nature discriminating method for a working machine according to yet another aspect of the present invention is a fuel nature discriminating method which discriminates the nature of fuel supplied to an engine of a working machine, wherein are executed: a step of detecting whether or not a predetermined detection timing, which has been set in advance, has arrived; a step of, when the predetermined detection timing has arrived, detecting the nature of fuel which is supplied into a fuel tank; a step of discriminating, on the basis of the fuel nature which has been detected, whether or not the fuel is a predetermined fuel which is determined in advance; and a step of restricting the operation of the working machine, if the result of discrimination is that it has been decided that the fuel supplied into the fuel tank is not the predetermined fuel.

According to the present invention, the nature of the fuel which is supplied to the fuel tank is detected, it is discriminated whether or not the fuel which has been supplied into the fuel tank is the predetermined fuel which has been set in advance, and it is possible to output control information on the basis of the result of this discrimination. Due to this, for example, it is possible to restrict the engine rotational speed or the operation of the working machine or the like, or to obstruct improper action by the user. For example, the upper limit of the engine rotational speed may be restricted to a low speed or an intermediate speed, or the operational speed of a shovel or a rotating body or the like may be slowed down.

According to the present invention, it is possible to discriminate whether or not the fuel used is the predetermined fuel on the basis of a detection signal which is outputted from the fuel nature detecting means at the time of supplying fuel into the fuel tank. Due to this, it is possible to discriminate the nature of the fuel with better accuracy, than would be the case if detection was performed after the fuel which is to be the subject of detection is already mixed in with the fuel which was previously present in the fuel tank. Moreover, since it is possible to perform discrimination at an early stage before starting the engine, accordingly it is possible to prevent the engine operating for a long time period while using an inferior fuel.

According to the present invention, the fuel nature detecting means is provided in a fuel stagnation unit for temporarily storing a portion of the fuel, and it is possible to determine whether or not the added fuel is the predetermined fuel, either at the time of supplying fuel or directly after the supply of fuel has ended. Due to this, it is possible to discriminate the nature of the fuel under more stabilized conditions, so that it is possible to enhance the accuracy of detection.

According to the present invention, it is possible to update an evaluation relating to the working machine (for example an evaluation of the operator or the like who is actuating the working machine, or an evaluation of the renter of the working machine or the like) on the basis of the result of discrimination. Due to this, it is possible to manage the working machine according to the type of the user in an appropriate manner: for example, it is possible to lower the evaluation of a poor user who repeatedly uses an inferior fuel, and to set tough conditions or the like for rental of the working machine. For example if the number of times that a fuel other than the predetermined fuel has been supplied into the fuel tank exceeds a number of times which has been set in advance, or if the amount of the fuel other than the predetermined fuel which has been supplied exceeds an amount which is set in advance, or the like, then it is possible to reduce the evaluation related to the working machine.

According to the present invention, if some fuel other than the predetermined fuel has been supplied, it is possible to calculate the amount of fuel which has been supplied on the basis of the amounts of remaining fuel before and after supply. Due to this, when the predetermined fuel is supplied, it is not necessary to perform calculation of the amount of fuel which is supplied, so that the structure of control can be simplified. Moreover, according to the present invention, if some fuel other that the predetermined fuel has been supplied, it is possible to calculate the amount of this supply, and to update the evaluation according to the magnitude of the amount which has been supplied.

Embodiments of the present invention will now be described in detail with reference to the drawings.
Fig. 1 is an explanatory figure showing the overall concept of an embodiment of the present invention;
Fig. 2 is an explanatory figure showing the network structure and so on of the fuel nature discriminating system;
Fig. 3 is a block diagram showing the structure of a working machine;
Fig. 4 is an explanatory figure showing the structure of a fuel tank and so on;
Fig. 5 is a block diagram of a management server;
Fig. 6 is a block diagram of a client server;
Fig. 7 is an explanatory figure showing the structure of fuel discrimination data and an analysis results database;
Fig. 8 is a flow chart showing fuel nature discrimination processing;
Fig. 9 is a flow chart showing client server processing;
Fig. 10 is a flow chart showing fuel nature discrimination processing according to a second embodiment;
Fig. 11 is a flow chart showing fuel nature discrimination processing according to a third embodiment;
Fig. 12 is an explanatory figure showing the principal portions of a fuel nature discriminating system according to a fourth embodiment;
Fig. 13 is a flow chart showing fuel nature discrimination processing;
Fig. 14 is an explanatory figure showing the principal portions of a fuel nature discriminating system according to a fifth embodiment; and
Fig. 15 is a flow chart showing fuel nature discrimination processing.

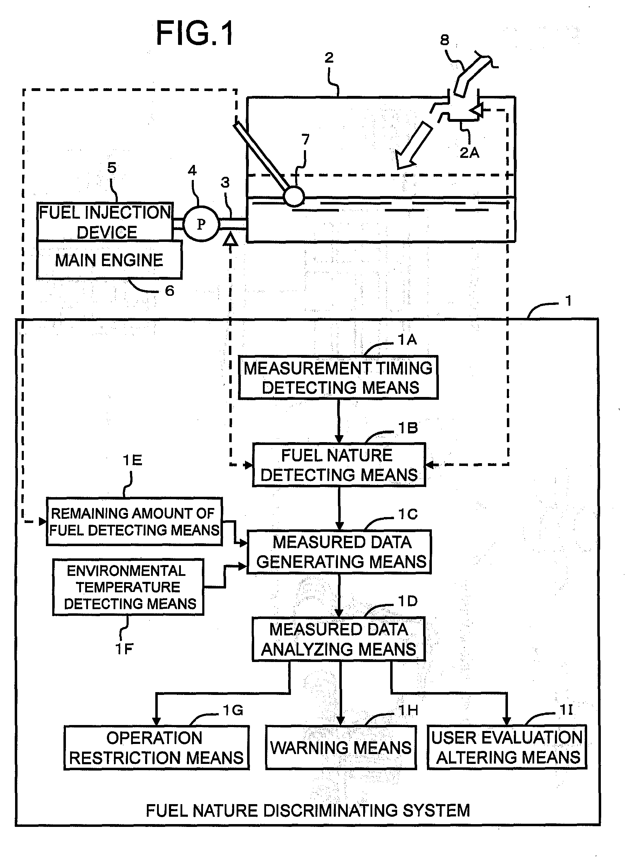

Fig. 1 is an explanatory figure showing the overall concept of an embodiment. The fuel nature discriminating system 1 according to this embodiment is applied to a working machine such as, for example, a wheel loader or a truck or the like.

The working machine includes, for example, a fuel tank 2, a fuel supply conduit 3, a fuel pump 4, a fuel injection device 5, a main engine 6, and a remaining amount of fuel sensor 7. Diesel oil is fed into the fuel tank 2 via, for example, a fuel supply nozzle 8. In this embodiment, the case of using diesel oil as the predetermined fuel will be explained.

A fuel nature detecting means 1 B (hereinafter also termed a "nature detection sensor") is provided in the fuel supply aperture of the fuel tank 2. This nature detection sensor 1 B detects one or more physical characteristics which originate in the difference between the normal fuel which is specified (diesel oil) and a fuel component other that diesel oil (kerosene), and outputs a detection signal. For example, the nature detection sensor 1 B may discriminate between diesel oil and kerosene on the basis of specific gravity, refractive index, density, a combination of these, or the like.

The fuel catching portion 2A is provided so as to be positioned within the fuel tank 2, at its fuel supply aperture. This fuel catching portion 2A temporarily catches and stops the fuel which flows in from the fuel supply aperture, and makes this fuel stagnate for a short time at the sensing portion of the nature detection sensor 1 B. Due to this, the nature detection sensor 1 B is able to perform more stabilized detection, than it would be able to in the case of detecting the nature of fuel which is directly falling down within the fuel tank 2 from the fuel supply aperture.

The fuel within the fuel tank 2 (diesel oil) is sucked in by the pump 4 and is supplied to the fuel injection device 5. The fuel injection device 5 injects the fuel which has been supplied from the fuel tank 2 into the main engine 6 at predetermined injection timings and predetermined injection amounts. The remaining amount of fuel sensor 7, for example, may consist of a float type sensor or the like. This remaining amount of fuel sensor 7 detects the amount of fuel within the fuel tank 2 and outputs it. By monitoring change of the remaining amount of fuel, it is possible to detect the start of fuel supply and the end of fuel supply.

The structure of the fuel nature discriminating system 1 will now be explained. This system 1 may comprise, for example, a measurement timing detecting means 1A, the fuel nature detecting means (i.e. the nature detection sensor) 1B, a measured data generating means 1C, a measured data analyzing means 1D, a remaining amount of fuel detecting means 1E, an environmental temperature detecting means 1F, an operation restriction means 1 G, a warning means 1H, and a user evaluation altering means 1I.

The measurement timing detecting means 1 A is a device for detecting whether or not a measurement timing for the nature of the fuel has arrived. As examples of this measurement timing, for example, there may be cited the moment of refueling (when supply starts, partway through supply, and when supply stops), when the engine is started, when the fuel nature discriminating system is started, when a predetermined time period has elapsed, or the like.

The measured data generating means 1C generates measured data on the basis of the measured value detected by the fuel nature detecting means 1B, the remaining amount of fuel detected by the remaining amount of fuel detecting means 1E, and the environmental temperature detected by the environmental temperature detecting means 1 F. The environmental temperature is an ambient temperature when measuring the nature of the fuel (for example, the fuel temperature). For example, the measured value of the fuel nature, the date and time of measurement, the identification information for this working machine, the environmental temperature, the remaining amounts of fuel before and after the start of measurement, and the like, may be included in the measured data. As the measured value, for example, the average value of a plurality of values measured several times may be used, or the like.

The measured data analyzing means 1 D (hereinafter also sometimes termed the "analyzing means 1 D") is a device which analyzes and decides upon the measured data which has been generated by the measured data generating means 1C. For example, this analyzing means 1D may decide upon the classification of the fuel which has been supplied by, after having corrected the measured value in the source data for the environmental temperature, comparing this measured value after correction with a threshold value.

Moreover, the analyzing means 1D calculates, from the change of the remaining amount of fuel before and after fuel supply, which type of fuel has been supplied and how much has been supplied, and obtains the component ratio of the fuel within the fuel tank 2. And the analyzing means 1 D compares together this fuel component ratio which has been calculated and a reference value, and thereby determines a control method. In other words, the analyzing means 1D, for example, may calculate the proportions of diesel oil and kerosene within the fuel tank 2, and may output control information for executing a predetermined control operation on the basis of the included proportion of kerosene (or on the basis of the proportion of included diesel oil). This control information may, for example, be outputted in the form of an electrical signal or a command or data.

The operation restriction means 1 G, for example, may restrict the rotational speed of the main engine 6, or may restrict the operations speed of a working device which is provided to the working machine. This operation restriction means 1 G, for example, may restrict the output of the main engine 6 by decreasing the amount of fuel injected by the fuel injection device 5. Reduction of the engine output also may include stopping the main engine 6. For example, if kerosene is mixed into the fuel tank 2 in greater than some predetermined proportion, then the operation restriction means 1 G may restrict the engine output according to command (i.e. according to the control signal) from the analyzing means 1 D. Due to this, it is possible to issue a warning to the user. Moreover, if starting of the main engine 6 is stopped, then it is possible to prevent supply of inferior fuel in which a large amount of impurity is included to the main engine 6, even before it happens.

It should be understood that, instead of restricting the engine output, or together with restricting the engine output, the operation restriction means 1G may also restrict the speed of a working device (for example, a boom, an arm, a bucket or the like) which is provided to the working machine to less than or equal to some fixed speed, or may restrict the rotation speed of a rotating body to less than or equal to some fixed speed. For example, by restricting the amount or the pressure of the working oil which is supplied to the working machine, it is possible to slow down the operation of a hydraulic cylinder or a hydraulic motor to slower than normal.

The warning means 1 H is a device for issuing a warning to the user of the working machine on the basis of control information from the analyzing means 1 D. As such a warning, for example, display output of a warning message, audio output of a warning message, turning an warning lamp on, sounding a warning buzzer or the like, or a combination of these, may be cited.

The user evaluation altering means 1I is a device for correcting the evaluation of the user of the working machine, on the basis of the control information from the analyzing means 1 D. Here, "user" means any user of the working machine, for example a renter who is renting the working machine. The user evaluation may be set to any of a number of stages, such as for example "excellent", "good", "normal", "poor", and the like. A high evaluation is accorded to a user who has always used diesel oil, which is the proper fuel, while a low evaluation is accorded to a user who has used kerosene, which is an improper fuel. This user evaluation may be employed by a business which supplies various services related to the working machine. For example, this may be a sales company, a rental company, an insurance company, a maintenance company, or the like.

Furthermore, instead of evaluating the user, or together with evaluating the user, it is also possible to perform evaluation of the working machine itself. A working machine in which an inferior fuel has frequently been used is considered to have suffered more deterioration or damage than a working machine in which normal fuel has been used, and, in the same task environment, it is considered that its appropriate timing for maintenance is earlier than that of another working machine which has been correctly used. Accordingly, for example, it would be acceptable to arrange to update an evaluation related to the maintenance timing for the working machine on the basis of the frequency of use of inferior fuel and/or the amount used (the amount supplied), thus scheduling maintenance as appropriate according to the state of fuel supply.

Furthermore it would also be possible, only if fuel other than normal fuel has been supplied, to calculate the amount of inferior fuel which has been supplied, and to restrict the operation of the working machine according to this supply amount. Moreover, it would also be possible to restrict the operation of the working machine on the basis of the number of times that fuel other than normal fuel has been supplied.

With embodiments structured in this manner, it is possible to perform appropriate control operation by discriminating the classification of the fuel which is supplied into the fuel tank 2, and by outputting control information according to the result of this discrimination. In the following, such embodiments will be explained in detail.

### Embodiment One

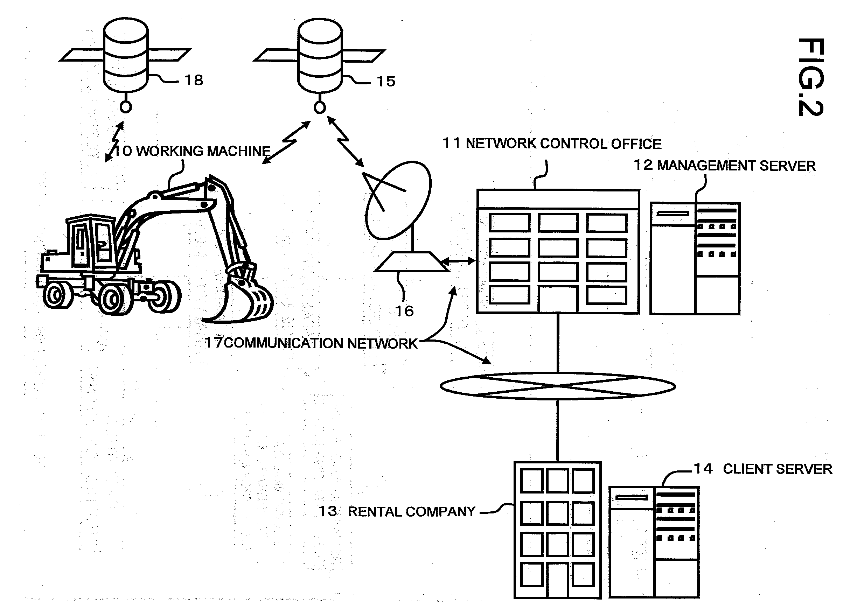

A first embodiment of the present invention will now be explained. Fig. 2 is an overall system view. As shown in Fig. 1, the fuel nature discriminating system according to this embodiment may be built to include a working machine 10, a management server 12 which is provided on the side of the maker of the working machine at a network control office 11, a client server 14 which is provided on the side of a rental company 13, and a communication network 17 which joins these together.

The communication network 17 is built to include a satellite communication circuit which connects together the working machine 10 and a satellite earth station 16 via a communication satellite 15, a dedicated ground communication circuit which connects together the satellite earth station 16 and the management server 12 of the network control office 11, and a computer network or the like such as an intranet or the internet or the like which connects together the management server 12 and the client server 14. The satellite communication circuit is used with the objective of making it possible to communicate between the management device and the working machine 10, at whatever location the working machine 10 may be. Instead of a satellite communication circuit, it would also be acceptable to use a mobile telephone communication network or a wireless communication network or the like, provided that it is capable of accomplishing a similar objective.

It is arranged for the position of the working machine 10 to be ascertained by the GPS (Global Positioning System) satellites 18. It should be understood that, as the working machine 10, there may be included, for example, a working machine such as a hydraulic shovel, a wheel loader, a bulldozer, a motor grader, a crane, or the like, a haulage vehicle such as a dump truck or the like, or an industrial machine such as various types of crusher and generator and the like. The management server 12 may be one in number, or may be plural.

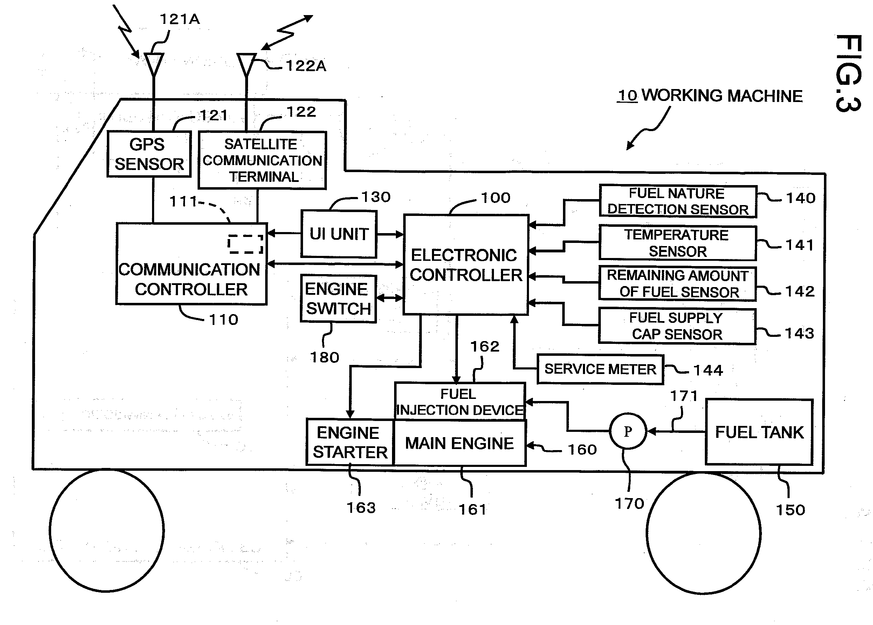

Fig. 3 is a block diagram showing the functional structure of the working machine 10. In Fig. 3, there are shown the structure of an engine system which consists of a fuel tank 150, an engine 160, a fuel pump 170, and so on, and the structure of a control system which consists of controllers 110 and 110 and so on. A first control system will now be explained.

The working machine 10 may, for example, include an electronic controller 100, a communication controller 110, a GPS sensor 121, a satellite communication terminal 122, a UI (User Interface) unit 130, a plurality of sensors 140 through 143, and a service meter 144. All or a portion of these various units may be mutually interconnected via one or a plurality of in-vehicle networks. Moreover, for example, it would also be possible to collect together a plurality of functions or circuits into one, so as to integrate the electronic controller 100 and the communication controller 110 together.

The communication controller 110, the UI unit 130, the group of the various sensors 140 through 143 and the service meter 144, a fuel injection device 162, and an engine starter 163 can be connected to the electronic controller 100.

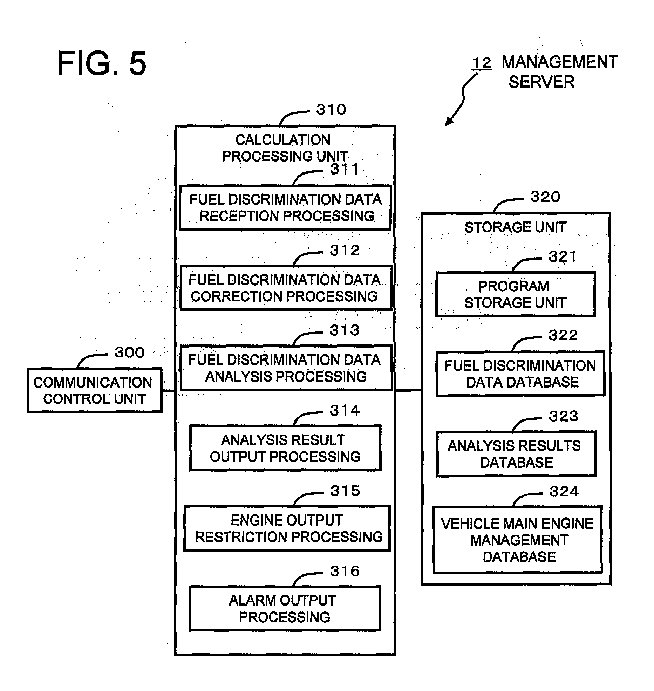

The fuel nature detection sensor 140 is a sensor which detects the nature and the state of the fuel on the basis of one or more physical characteristics which the fuel possesses, such as, for example, its specific gravity, its refractive index, its density, and so on. In this embodiment, on the basis of the detection signal from the sensor 140, it is discriminated whether or not the fuel is diesel oil (i.e., whether it is diesel oil or kerosene). For example, a temperature sensor 141 is a device which measures the ambient temperature around the fuel nature detection sensor 140 and outputs it. A remaining amount of fuel sensor 142 is a device which measures the remaining amount of fuel in the fuel tank 150 and outputs it. A fuel supply cap sensor 143 is a device which detects whether or not a fuel supply cap 151 (refer to Fig. 5) is fitted to the fuel tank 150. The service meter 144 is a device for measuring and integrating the operating time of the working machine 10. It should be understood that, apart from the sensor group described above, for example, a sensor group which includes an engine rotational speed sensor, a battery voltage sensor, a cooling water temperature sensor, and the like is also connected to the electronic controller 100. Instead of the temperature sensor 141, it would also be acceptable to use a cooling water temperature sensor.

The electronic controller 100 is able to generate information which specifies the operation time, the engine rotational speed, the battery voltage, the fuel amount, the cooling water temperature and so on that have been detected by the sensor group described above, and is able to transmit that information to the communication controller 110. The above information which specifies various states and operations of the working machine 10, such as the operating time and the engine rotational speed and so on, will be generically referred to as "operating information".

The communication system of the working machine 10 will now be explained. The GPS sensor 121 has a GPS antenna 121A for receiving radio waves from the GPS satellite 18. This GPS sensor 121 measures the current position of the working machine 10, and notifies this to the communication controller 110. The satellite communication terminal 122 has a satellite communication antenna 122A for communicating with the communication satellite 15. This satellite communication terminal 122 makes it possible for communication to be established, via the satellite communication network, between the communication controller 110 and the management server 12.

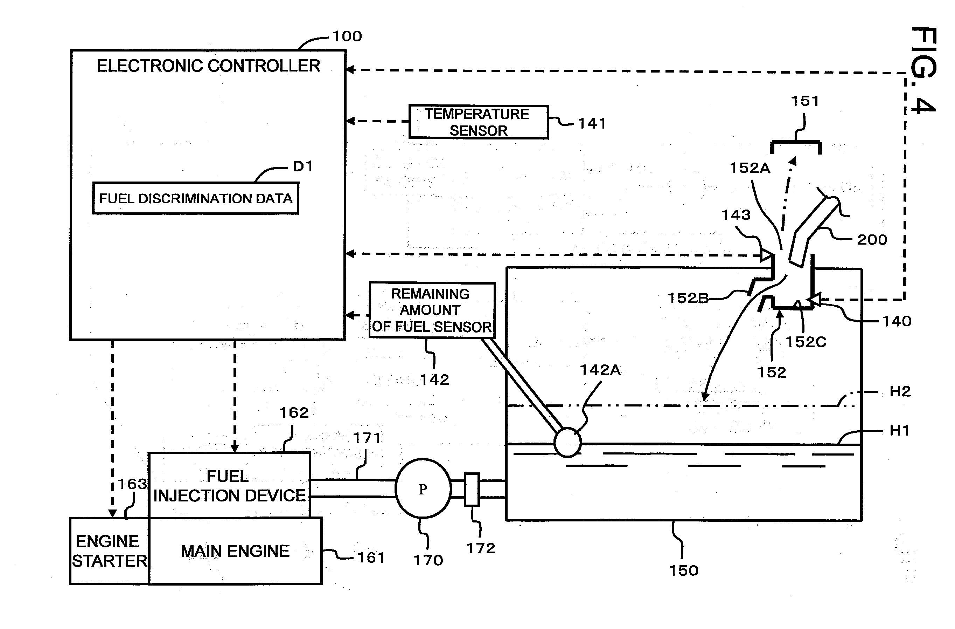

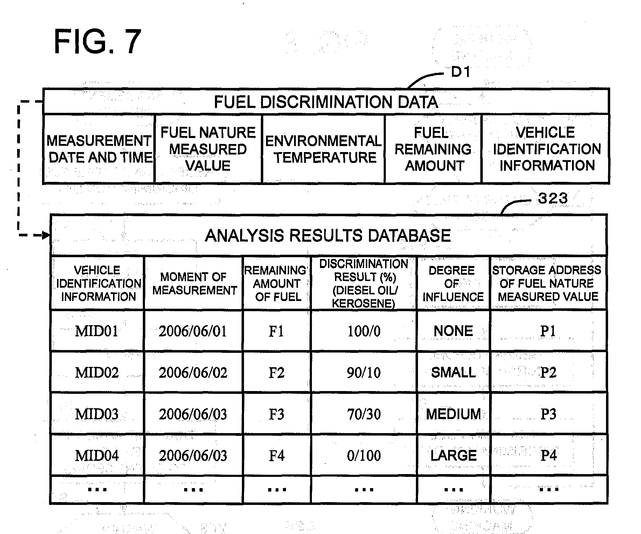

The communication controller 110 controls communication with the management server 12. This communication controller 110 receives the operating information and the fuel discrimination data (refer to Figs. 4 and 7) from the electronic controller 100. Moreover, the communication controller 110 receives positional information specifying the current position from the GPS sensor 121. And the communication controller 110 transmits this operating information, fuel discrimination data, and position information to the management server 12 via the satellite communication terminal 122 and the satellite communication circuit, periodically or at indeterminate times. For example, the communication controller 110 may transmit the operating information and the position information to the management server 12 in a time slot after some current task has ended, once a day. And the communication controller 110 may also, for example, transmit the fuel discrimination data to the management server 12 at the moment of refueling, or when the engine is started or the like.

The communication controller 110 may be provided with a non-volatile storage device 111 which can be rewritten. For example, the position information for the working machine 10, its operating time, and the operating history of the working machine 10 and so on may be stored in this storage device 111. Moreover, on the side of the management server 12, a working area may also be established. Such a working area is an region for activity which is established and specified, by mutual agreement between the user and the rental company 13, at the time of establishing a contract when the user receives a loan from the rental company 13. This working area means that the rental company 13 does not permit the user to take the working machine 10 outside this region for activity. The management server 12 decides whether or not the working machine 10 is located outside the working area, on the basis of the position information received from the working machine 10. If, as a result, it has been decided that the working machine 10 is located outside the working area, the management server 12 may even, according to requirements, remotely actuate a locking device of the working machine 10, thus locking the working machine 10.

The UI unit 130 may, for example, be provided in the vicinity of the driving seat of the working machine 10. This UI unit 130 may include, for example, an output unit and an input unit. As output units, for example, a display device and an audio output device and the like may be cited. As input units, for example, keyboard switches, a pointing device, a microphone and the like may be cited. If a fuel other than diesel oil (kerosene) is mixed into the fuel tank 150, the UI unit 130 outputs a warning message on the basis of a command from the management server 12.

The engine system of the working machine 10 will now be explained in a simple manner. The fuel tank 150 is a device for storing fuel. The fuel pump 170 sucks out fuel in the fuel tank 150 via a fuel supply conduit 171, and supplies that fuel to the engine 160.

The engine 160 may include, for example, a main engine 161, the fuel injection device 162, and the engine starter 163. When the user actuates an engine switch 180, the engine 160 is started by the engine starter 163. The engine 160 combusts the fuel which has been injected into the main engine 161 from the fuel injection device 162, and thereby outputs rotary power. It should be understood that a filter 172 (refer to Fig. 4) is provided between the fuel pump 170 and the fuel tank 150, for eliminating foreign matter and the like.

Fig. 4 is an explanatory figure showing structures related to the fuel nature discriminating system. First, the details of the fuel tank 150 will be explained. A fuel supply aperture 152A is provided to the upper portion of the fuel tank 150. This fuel supply aperture 152A is normally closed by a fuel supply cap 151. It is arranged for it to be possible to replenish the fuel in the fuel tank 150 by, at the moment of refueling, removing the fuel supply cap 151, and inserting a fuel supply nozzle 200 into the fuel supply aperture 152A. Whether or not the fuel supply aperture 152A is closed by the fuel supply cap 151 is detected by the fuel supply cap sensor 143.

A fuel catching portion 152 is provided within the fuel tank 150, positioned underneath the fuel supply aperture 152A. This fuel catching portion 152 temporarily catches and stops the fuel which is ejected from the fuel supply nozzle 200. The fuel catching portion 152 is provided with a fuel outflow outlet 152B, so that the fuel which has been ejected from the fuel supply nozzle 200 flows into the fuel tank 150 from this fuel outflow outlet 152B. The fuel nature detection sensor 140 is provided in the vicinity of the bottom portion 152C of the fuel catching portion 152. This sensor 140 detects the nature of the fuel as it temporarily stagnates within the fuel catching portion 152.

A float 142A is provided within the fuel tank 150 so as to be shiftable. This float 142A is displaced upwards and downwards by the liquid surface H1, H2 of the fuel within the fuel tank 150. The amount of displacement of the float 142A is converted into the amount of fuel which remains by the remaining amount of fuel sensor 142. The liquid surface H1 in the figure indicates the state directly before supply of fuel, while H2 indicates a state during fuel supply. It should be understood that the method for detecting the remaining amount of fuel is not limited to the float type described above. For example, it would also be possible to employ a structure in which the position of the liquid surface of the fuel is measured by an optical sensor or an ultrasound sensor or the like, or some other structure. The electronic controller 100 generates the fuel discrimination data D1 on the basis of the signal or the like from the fuel nature detection sensor 140. The fuel discrimination data D1 which has thus been generated is transmitted to the management server 12. The structure of this fuel discrimination data D1 will be described hereinafter with reference to Fig. 7.

Fig. 5 shows the functional structure of the management server 12. This management server 12 may, for example, include a communication control unit 300 which controls communication with the computer network, a calculation processing unit 310 for processing information transmitted and received via the communication control unit 300, and a storage unit 320 which consists of a semiconductor memory or a hard disk device or the like.

The storage unit 320 includes a program storage unit 321 in which various types of computer program which are executed by the calculation processing unit 310 are stored, and various types of database 322 through 324. A database 322 for the fuel discrimination data is a database for managing the fuel discrimination data D1 which has been received from the working machine 10. An analysis results database 323 is a database for managing the results of analysis of the fuel discrimination data D1. And a vehicle main engine management database 324 is a database for managing the operating information and the position information and so on of the working machine 10.

According to the various types of computer program described above, the calculation processing unit 310 executes fuel discrimination data reception processing 311, fuel discrimination data correction processing 312, fuel discrimination data analysis processing 313, analysis result output processing 314, engine output restriction processing 315, and alarm output processing 316.

The fuel discrimination data reception processing 311 is a function in which the fuel discrimination data D1 is received from the working machine 10, and is accumulated in the database 322. And the fuel discrimination data correction processing 312 is processing for correcting the measured value of the nature of the fuel included in the fuel discrimination data D1, according to the temperature included in the fuel discrimination data D1.

Moreover, the fuel discrimination data analysis processing 313 is a function in which, on the basis of the measured value of the nature of the fuel after temperature correction and the remaining amount of fuel, which are included in the fuel discrimination data D1, the ratio of diesel oil and kerosene in the fuel tank 150 is calculated, and control commands are outputted according to this ratio which has been calculated. The analysis result output processing 314 is a function in which the analysis results are transmitted to the client server 14. The engine output restriction processing 315 is a function in which, if a command for restricting the output of the engine has been issued from the analysis processing 313, a remote actuation signal is transmitted to the working machine 10, so as thereby to cause the output of the engine 160 to be restricted. And the alarm output processing 316 is a function in which, if a command for outputting an alarm has been issued from the analysis processing 313, a signal is transmitted to the working machine 10, so as thereby to cause an alarm to be outputted from the UI unit 130. It should be understood that it would also be acceptable, according to circumstances, instead of restricting the output of the engine, or as well as restricting the output of the engine, to trigger operation of the lock device of the working machine 10 by remote actuation, so as to put the working machine 10 into the locked state.

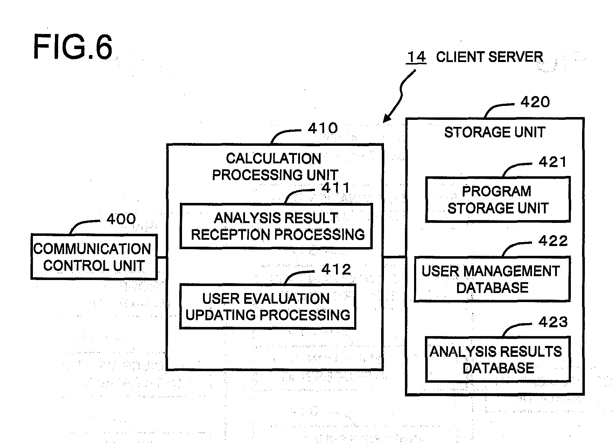

Fig. 6 shows the functional structure of the client server 14. This client server 14 is connected to the computer network, and can communicate with the management server 12. The client server 14 may include a communication control unit 400, a calculation processing unit 410, and a storage unit 420.

The storage unit 420 consists of, for example, a semiconductor memory or a hard disk device or the like, and stores the program storage unit 4212 the user management database 422 and the analysis results database 423. A program for evaluating the user of the working machine 10 on the basis of the results of analysis of fuel discrimination and so on are stored in the program storage unit 421. The user management database 422 manages evaluations related to the user of the working machine 10. And the analysis results database 423 manages analysis results received from the management server 12.

The calculation processing unit 410 implements analysis result reception processing 411 and user evaluation updating processing 412 by executing a computer program. The analysis result reception processing 411 is a function in which analysis results transmitted from the management server 12 are received, and are accumulated in the database 423. And the user evaluation updating processing is a function in which evaluation of the user is updated, on the basis of the results of analysis of the fuel.

It should be understood that it would also be acceptable to provide a structure in which all or a portion of the functions possessed by the management server 12, and all or a portion of the functions possessed by the client server 14, are combined together. For example, it would be acceptable to arrange to provide a structure in which collection of information from various working machines 10, analysis, and user evaluation are all performed by a single server.

Fig. 7 shows the structure of the fuel discrimination data D1 and of the analysis results database 323. In this fuel discrimination data D1 there may be included, for example, the date and time of measurement, the measured value of the nature of the fuel, the fuel temperature at the time of measurement, the remaining amount of fuel, and identification information for the vehicle.

Here, the measured value of the nature of the fuel is the data before temperature correction, i.e. so called source data. In the remaining amount of fuel, there is set the remaining amount of fuel during measurement, or the remaining amount of fuel after measurement has ended. As will be described hereinafter, when discriminating the nature of the fuel at the moment of refueling, the remaining amount of fuel is set when fuel supply has been completed. The vehicle identification information is information for specifying the working machine 10. For example, the body number of the working machine 10, the network address of its satellite communication terminal 122, the electronic mail address of its satellite communication terminal 122, or the like may be used.

The analysis results database 323 is for managing the results of analysis of the fuel discrimination data D1, and, for example, may include the vehicle identification information, the moment of measurement, the remaining amount of fuel, the result of discrimination, the degree of influence, and the address at which the measured value of the nature of the fuel is stored.

The result of discrimination specifies the ratio of diesel oil and kerosene contained in the fuel tank 150. For example, if kerosene has been supplied, it is possible to calculate the amount of kerosene which has been supplied from the difference between the remaining amount of fuel when fuel supply started, and the remaining amount of fuel after fuel supply ended. Due to this, it is possible to calculate the amount of diesel oil present within the fuel tank 150 and the amount of kerosene which is present, and to obtain their proportions.

The degree of influence specifies the degree of influence exerted upon the engine 160 of the working machine 10 by the components of the fuel within the fuel tank 150. For example, if a fuel which includes a large amount of a component other than specified (i.e. a fuel in which the ratio of diesel oil is low) is used, then there is a possibility of causing damage to the fuel injection device 162 or the like. Thus, the management server 12 sets the degree of influence by splitting the proportions of diesel oil and kerosene into groups. As the degree of influence, for example, the values "no influence", "small", "medium", and "large" or the like may be used. The storage address of the measured value of fuel discrimination is information which specifies the region in which the measured value, which is source data, is stored.

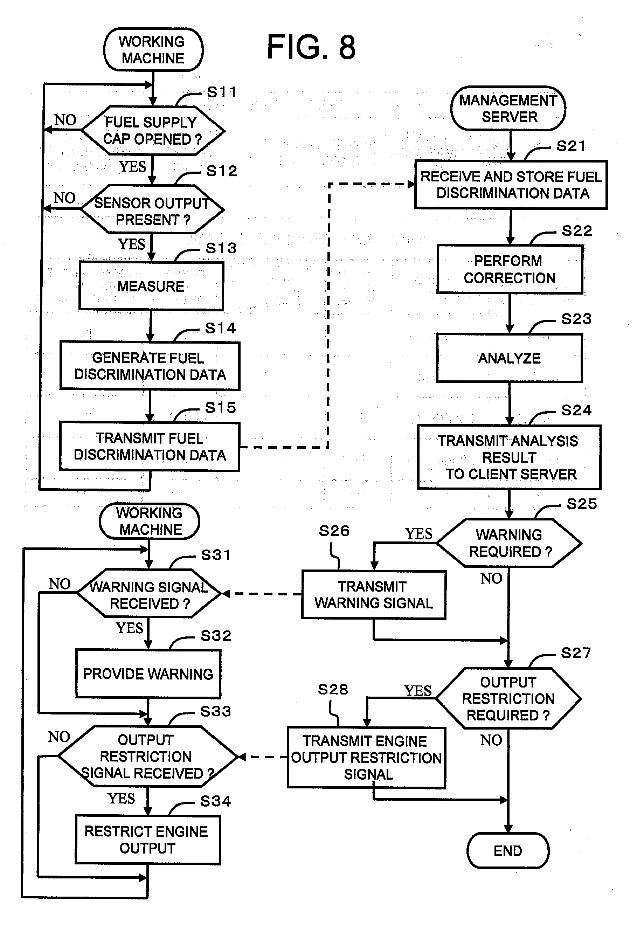

Fig. 8 is a flow chart showing the operation of this fuel nature discrimination system. In this embodiment, as will be described hereinafter, the nature of the fuel is discriminated at the moment that the fuel tank 150 is refueled. Thus, the working machine 10 decides whether or not the fuel supply cap 151 is opened, based upon the detection signal from the fuel supply cap sensor 143 (a step S11).

If the fuel supply cap 151 has been removed (YES in the step S11), then the working machine 10 decides whether or not a detection signal has been outputted from the fuel nature detection sensor 140 (a step S12). When supply of fuel from the fuel supply nozzle 200 is started, the nature of the fuel is detected by the sensor 140. In other words, it is possible to detect the start of fuel supply from the change in the detection signal of the sensor 140.

When the supply of fuel is started (YES in the step S12), the working machine 10 measures the nature of the fuel which is flowing into the fuel tank 150 (a step S13). And the working machine 10 generates the fuel discrimination data D1 (a step S14), and transmits this fuel discrimination data D1 which has been generated to the management server 12 (a step S15).

The management server 12 receives and stores the fuel discrimination data D1 from the working machine 10 (a step S21), and corrects the measured value with the measured temperature (a step S22). This is because, if the nature of the fuel is discriminated by using its specific gravity or the like, then the measured value has a temperature dependence. It should be understood that, if the value is used of a physical property which does not depend upon the temperature, then there is no need to perform any temperature correction.

The management server 12 analyzes the measured value of the temperature after amendment, and calculates the proportions of diesel oil and of kerosene within the fuel tank 150 (a step S23). Moreover, the management server 12 is also able to calculate the degree of influence upon the basis of this ratio of the fuel components. The analysis result which has been obtained in this manner is transmitted to the client server 14 (a step S24).

Furthermore, on the basis of the analysis result, the management server 12 makes a decision as to whether or not it is necessary to issue a warning to the user (a step S25). For example, a warning may be issued if kerosene has been supplied, irrespective of the actual quantity of kerosene which has been supplied. If it has been decided that it is necessary to issue a warning (YES in the step S25), then the management server 12 transmits a warning signal to the working machine 10 (a step S26).

After issue of the warning command, the management server 12 makes a decision as to whether or not restriction of the output of the engine 160 is required (a step S27). For example, if greater than or equal to a predetermined proportion (or greater than or equal to a predetermined amount) of kerosene is present within the fuel tank 150, then the management server 12 determines upon restriction of the engine output. If restriction of the engine output has been determined upon (YES in the step S27), then the management server 12 transmits a signal to the working machine 10 in order to cause it to restrict the output of the engine (a step S28).

When the working machine 10 receives a warning signal from the management server 12 (YES in a step S31), it issues a warning to the user via the UI unit 130 (a step S32). For example, it may cause the UI unit 130 to display a message such as "The use of kerosene is forbidden by law." or "Please stop using the working machine, because if an inferior fuel is used this may cause damage to the engine or some other part." or the like. If the management server 12 knows the electronic mail address of the user, then it may also issue a warning to the user by electronic mail.

When the working machine 10 receives an engine output restriction signal from the management server 12 (a step S33), it restricts the output of the engine (a step S34). For example, the working machine 10 may set an upper limit for the fuel injection amount, or may restrict the engine rotational speed to an intermediate speed or to a low speed. Or the working machine 10 may also restrict the starting of the engine 160.

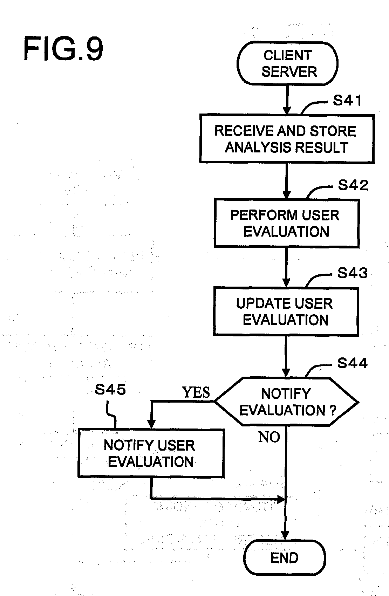

Fig. 9 is a flow chart showing the operation of the client server 14. The client server 14 receives and stores the analysis result from the management server 12 (a step S41). And the client server 14 re-evaluates the user of this working machine 10 on the basis of the analysis result (a step S42), and updates the user evaluation (a step S43). Moreover, the client server 14 decides whether or not this user evaluation should be notified to the user (a step S44). And, if it has been decided that such a notification should be issued (YES in the step S44), then the client server 14 issues a notification to the user of his evaluation (a step S45).

For example if the usage has been confirmed of diesel oil, which is the normal fuel, then this user receives a high user evaluation, since he is an excellent user or a good user. By contrast, if the usage has been confirmed of kerosene, which is not the normal fuel, then this user receives a low user evaluation, since he is a poor user. If the user evaluation has decreased as far as some fixed value, then the client server 14 may change, for example, the loan conditions of the working machine, its insurance premium, its maintenance conditions, or the like, to some other conditions which are more disadvantageous to the user. For example the rental company 13, which is the owner of the working machine 10, may cancel rental to a poor user, or may set the rental fee to be higher than in the case of a normal user.

As has been described in detail above, in this embodiment, it is arranged for the nature of the fuel to be discriminated, for the result of this discrimination to be analyzed, and for appropriate control operation to be performed. Due to this, it is possible to suppress the usage of inferior fuel, and it is thus possible to prevent deterioration of the exhaust gases and damage being caused to the engine 160.

In this embodiment, if kerosene has been supplied, a warning is issued to the user. Accordingly, the user may be warned immediately at the moment of refueling with diesel oil, and thereafter he may be invited to take appropriate measures, or the like.

In this embodiment, the nature of the fuel is discriminated at the moment of refueling. Accordingly it is possible to perform discrimination with better accuracy that when discriminating the nature of the fuel after it has been mixed into fuel which is already present within the fuel tank 150. Furthermore it is possible to institute appropriate control operation at an earlier stage, since the discrimination is performed at the moment of refueling.

In this embodiment, the fuel catching portion 152 is provided at the fuel supply aperture 152A, and the nature of the fuel is measured at the moment of refueling, as the fuel is temporarily stagnated. Due to this, it is possible to make the measurement environment more stable than if the fuel were measured as it flowed directly into the fuel tank 150 from the fuel supply aperture 152A, and accordingly it is possible to enhance the accuracy of measurement.

### Embodiment Two

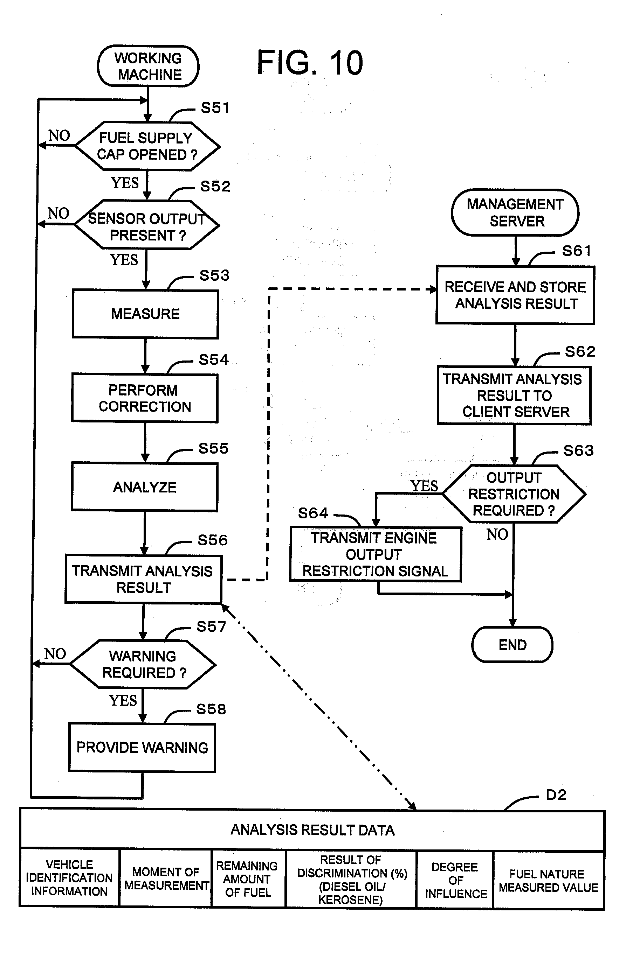

A second embodiment will now be explained on the basis of Fig. 10. In this embodiment, temperature correction and analysis and so on of the measured value of the nature of the fuel are performed within the working machine 10. Fig. 10 is a flow chart showing processing which is executed by the fuel nature discrimination system according to this embodiment.

If the fuel supply cap 151 has been removed (YES in the step S51), and moreover a detection signal is outputted from the fuel nature detection sensor 140 (YES in the step S52), then the working machine 10 measures the nature of the fuel (a step S53), and corrects the measurement result for temperature (a step S54). And on the basis of the temperature corrected measured value, the working machine 10 (i.e. the electronic controller 100) analyzes the component ratio and so on of the fuel within the fuel tank 150 (a step S55).

The working machine 10 transmits the result of this analysis to the management server 12 (a step S56). And, on the basis of this analysis result, the working machine 10 makes a decision as to whether or not a warning to the user is required (a step S57). If it has been decided that a warning is necessary (YES in the step S57), then the working machine 10 immediately warns the user (a step S58).

On the other hand, the management server 12 receives the analysis result from the working machine 10 and stores it (a step S61), and transmits this analysis result to the client server 14 (a step S62). And the management server 12 makes a decision whether or not restriction of the output of the engine is necessary (a step S63), and if it has decided that such restriction is necessary (YES in the step S63), transmits an engine output restriction signal to the working machine 10 (a step S64).

As shown in the lower portion of Fig. 10, the analysis result data D2 which is transmitted from the working machine 10 to the management server 12 may, for example, include the vehicle identification information, the moment of measurement, the remaining amount of fuel, the result of discrimination, the degree of influence, and the measured value of the nature of the fuel.

With this embodiment having this type of structure, similar advantageous effects may be obtained as with the first embodiment. In addition thereto, in this embodiment, since the measured value of the nature of the fuel is analyzed on the side of the working machine 10, and the analysis result is transmitted to the management server 12, accordingly it is possible to provide a warning immediately, and it is possible to alleviate the processing burden upon the management server 12. For example, even if fuel supply has been performed in a location in which the communication environment is bad, the working machine 10 is able to provide a warning immediately at the time point of fuel supply, and is accordingly able to curb improper action by the user. Moreover, it is possible to alleviate the load upon the management server for managing a large number of working machines 10 at the same time.

### Embodiment Three

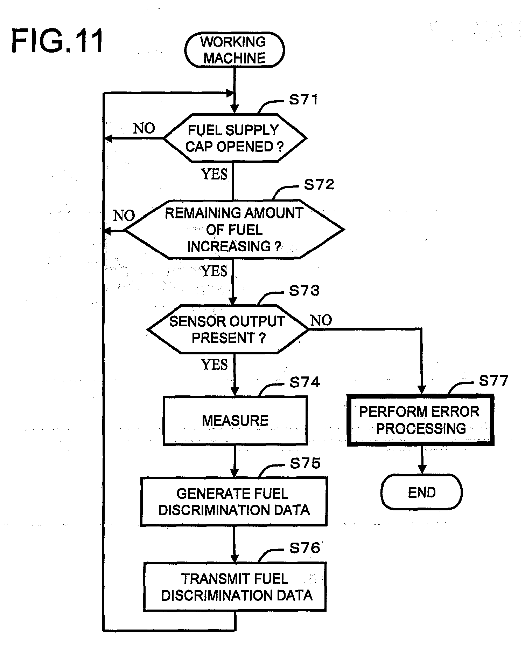

A third embodiment will now be explained on the basis of Fig. 11. In this embodiment, it is arranged for it to be possible to diagnose whether or not the fuel nature detection sensor 140 is operating normally. Fig. 11 is a flow chart which is executed by the fuel nature discrimination processing system according to this embodiment.

When, on the basis of the detection signal from the fuel supply cap sensor 143, it has been detected that the fuel supply cap 151 has been removed (YES in the step S71), then the working machine 10 makes a decision as to whether or not the amount of fuel in the fuel tank 150 is increasing (a step S72).

If the remaining amount of fuel is increasing (YES in the step S72), then the working machine 10 makes a decision as to whether or not a detection signal is being outputted from the fuel nature detection sensor 140 (a step S73). If a detection signal is being outputted from the fuel nature detection sensor 14 (YES in the step S73), then, since the fuel nature detection sensor 140 is operating normally, the fuel nature is measured (a step S74). And the working machine 10 creates the fuel discrimination data D1 (a step S75), and transmits this fuel discrimination data D1 to the management server 12 (a step S76).

By contrast, if no detection signal is outputted by the fuel nature detection sensor 140 (NO in the step S73) even though the remaining amount of fuel is increasing, then it is considered that, for example, some failure is occurring in this sensor 140, or in the communication path between the sensor 140 and the electronic controller 100. Thus, the working machine 10 performs error processing (a step S77). As such error processing, for example, issuing a notification to the user and issuing a report to the management server 12 may be suggested.

With this embodiment having this type of structure, similar advantageous effects may be obtained as with the first embodiment. In addition thereto, in this embodiment, since it is possible to diagnose whether or not the fuel nature detection sensor 140 is operating normally, accordingly the reliability is enhanced by yet a further level.

### Embodiment Four

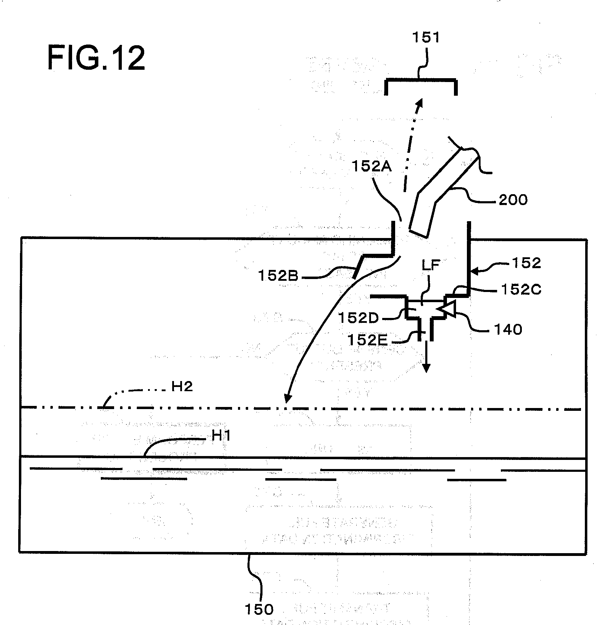

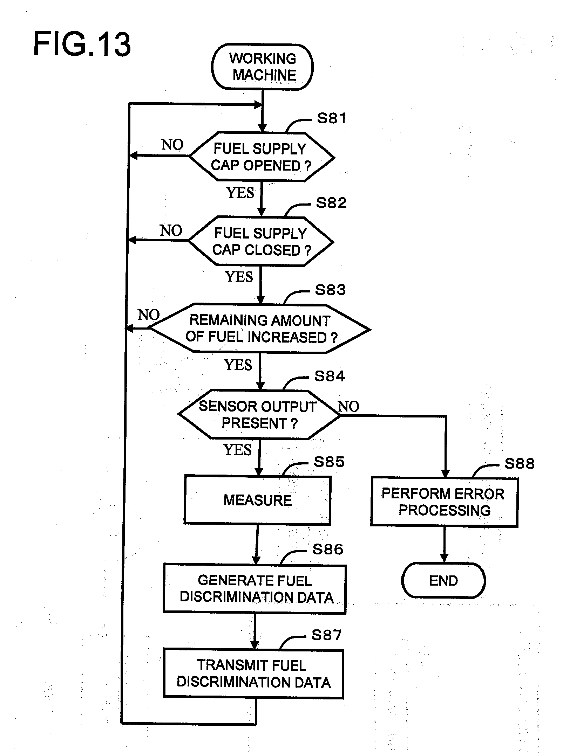

A fourth embodiment will now be explained on the basis of Figs. 12 and 13. In this embodiment, a fuel catching portion 152 and a fuel storage portion 152D for measurement are provided. Fig. 12 is an explanatory figure schematically showing the structure of the fuel tank 150 and the fuel catching portion 152.

The fuel catching portion 152 of this embodiment has the fuel storage portion 152D which is formed by making a portion of its bottom portion 152C concave. A small diameter fuel exhaust outlet 152E is provided to this fuel storage portion 152D.

The greater portion of the fuel which is ejected from the fuel supply nozzle 200 falls down into the fuel tank 150 from the outflow outlet 152B. However, another portion LF of the fuel is stored in the fuel storage portion 152D. Accordingly, even after fuel supply ends and the fuel supply aperture 152A is closed by the fuel supply cap 151, fuel stagnates in the fuel storage portion 152D, albeit for a short time period only. And the fuel nature detection sensor 140 detects the nature of the fuel LF which is stagnating within the storage portion 152D. The small residual amount of fuel LF which remains within the fuel storage portion 152D gradually is discharged from the fuel exhaust outlet 152E.

Fig. 13 is a flow chart showing processing which is executed by the fuel nature discrimination system according to this embodiment. After the fuel supply cap 151 has been removed (YES in the step S81), the working machine 10 makes a decision as to whether or not the fuel supply aperture 152A has been closed by the fuel supply cap 151 (a step S82). And the working machine 10 makes a decision as to whether or not the remaining amount of fuel is increased (a step S83).

If, after the fuel supply cap has been removed and replaced, the remaining amount of fuel is increased (YES in the step S83), then it may be considered that the task of supplying fuel has been performed. Directly after the task of supplying fuel has been performed, a small amount of fuel LF will remain within the fuel storage portion 152D. Thus, the working machine 10 makes a decision as to whether or not a detection signal is being outputted from the fuel nature detection sensor 140 (a step S84). If a detection signal is being outputted (YES in the step S84), then the working machine 10 measures the nature of the fuel (a step S85), generates the fuel discrimination data D1 (a step S86), and transmits that data to the management server 12 (a step S87).

By contrast, if no detection signal is outputted by the fuel nature detection sensor 140 (NO in the step S84) even though the remaining amount of fuel is increasing, , then the working machine 10 decides that a fault has occurred in the fuel nature detection sensor 140 or the like, and performs error processing (a step S88).

With this embodiment having this type of structure, similar advantageous effects may be obtained as with the first embodiment. In addition thereto, in this embodiment, since the fuel storage portion 152D is provided for keeping some fuel for a short time period only after the task of supplying fuel has been completed, accordingly it is possible to measure the nature of the fuel in more stabilized conditions.

### Embodiment Five

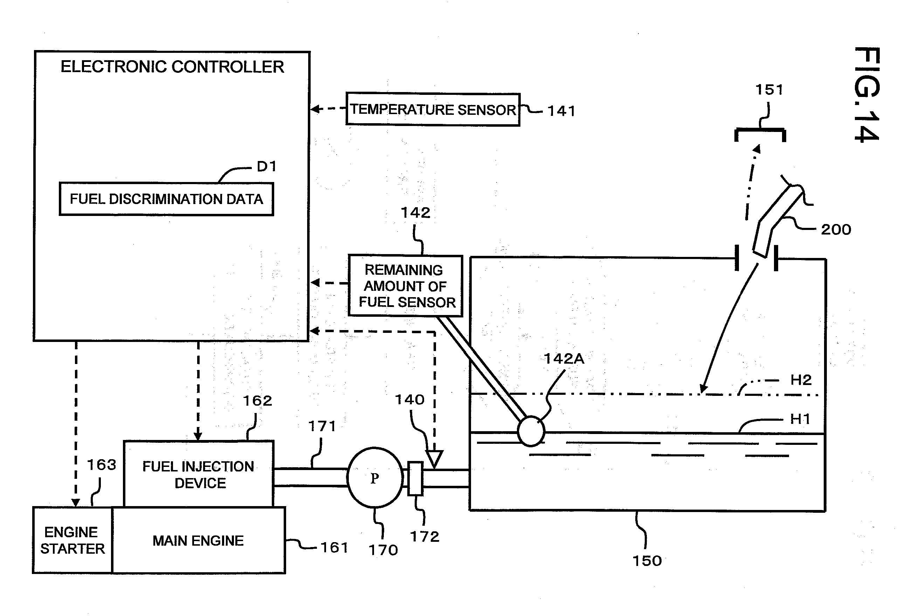

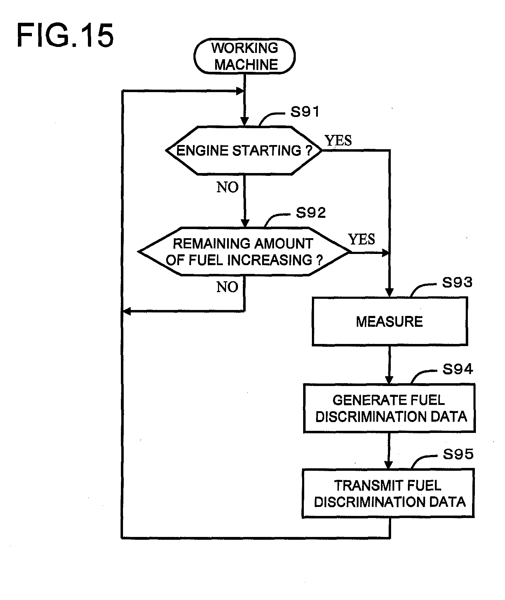

A fifth embodiment will now be explained on the basis of Figs. 14 and 15. In this embodiment, along with the fitting position of the fuel nature detection sensor 140 being changed to be on the upstream side of the filter 172, the timing of measurement of the nature of the fuel is changed to be when the engine is started.

Fig. 14 is an explanatory figure schematically showing the principal portions of the fuel nature discriminating system according to this embodiment. In this embodiment, the fuel nature detection sensor 140 is provided between the filter 172 and the fuel tank 150. Accordingly, in this embodiment, the fuel catching portion 152 is eliminated.

Fig. 15 is a flow chart for the fuel nature discrimination processing according to this embodiment. When either of the engine 160 being started (YES in a step S91) or the remaining amount of fuel having increased (YES in a step S92) is detected, the working machine 10 measures the nature of the fuel (a step S93). And the working machine 10 generates the fuel discrimination data D1 (a step S94), and transmits this fuel discrimination data D1 to the management server 12 (a step S95).

With this embodiment having this type of structure, the fuel nature is discriminated, and, appropriate control operation may be performed upon the basis of analysis of the result of this discrimination. In addition to this, since in this embodiment the fuel nature detection sensor 140 is provided partway along the fuel supply conduit 171, accordingly the fuel catching portion 152 becomes unnecessary, and it is possible to simplify the task of fitting the sensor 140.

It should be understood that the embodiments described above are only shown by way of example for explanation of the present invention; the range of the present invention is not to be considered as being limited thereby. The present invention may be implemented in various other manners than in the embodiments described above, provided that its scope is not departed from.

## Claims

1. A fuel nature discriminating system which discriminates the nature of fuel supplied to an engine (6, 160) of a working machine (10), comprising:
a fuel nature detecting means (1 B, 140) which detects the nature of fuel supplied into a fuel tank (2, 150), and outputs a detection signal;
a discriminating means (1D, 313) which discriminates whether or not fuel which has been supplied into said fuel tank is a predetermined fuel which is set in advance, on the basis of the detection signal from said fuel nature detecting means; and
a control information output means (1 G, 1H, 315, 316) which outputs control information on the basis of the result of discrimination by said discriminating means.

2. A fuel nature discriminating system for a working machine according to Claim 1, wherein:
said fuel nature detecting means (1 B, 140) is provided in the vicinity of a fuel supply aperture (152A) of said fuel tank (2, 150); and
said discriminating means (1D, 313) discriminates whether the fuel supplied into said fuel tank is said predetermined fuel or not, on the basis of a detection signal outputted from said fuel nature detecting means at a time of fuel supply into said fuel tank.

3. A fuel nature discriminating system for a working machine according to Claim 1, wherein:
a fuel stagnation unit (152D) is provided within said fuel tank (2, 150) for temporarily storing a portion of the fuel supplied into said fuel tank;
said fuel nature detecting means (1 B, 140) is provided in the vicinity of said fuel stagnation unit; and
said discriminating means (1D, 313) discriminates whether or not the fuel supplied into said fuel tank is said predetermined fuel or not, on the basis of a detection signal outputted from said fuel nature detecting means either at the moment of refueling said fuel tank, or directly after refueling has ended.

4. A fuel nature discriminating system for a working machine according to Claim 1, wherein:
said fuel nature detecting means (1 B, 140) is provided partway along a fuel supply path (3, 171) which supplies fuel from said fuel tank (2, 150) to said engine (6, 160); and
said discriminating means (1D, 313) discriminates whether or not the fuel supplied into said fuel tank is said predetermined fuel or not, on the basis of a detection signal outputted from said fuel nature detecting means when said engine is started, or when the amount of fuel remaining in said fuel tank is increased.

5. A fuel nature discriminating system for a working machine according to any one of Claims 1 through 4, wherein, if it has been decided by said discriminating means that said fuel is not said predetermined fuel, said control information output means (1G, 1H, 315, 316) outputs one or both of warning information, and operational state restriction information for restricting the operational state of said working machine.

6. A fuel nature discriminating system for a working machine according to Claim 5, wherein said operational state restriction information is information which restricts the engine rotational speed of said engine.

7. A fuel nature discriminating system for a working machine according to Claim 5, wherein said operational state restriction information is information which restricts the operation of a working device possessed by said working machine.

8. A fuel nature discriminating system for a working machine, comprising a plurality of working machines (10) and a management device (12) which are connected together via a communication network (17) so as to be capable of mutual communication, wherein:
each of said working machines (10) comprises:
a fuel tank (150) which supplies fuel to an engine (160);
a fuel nature detecting means (140) which detects the nature of fuel supplied into said fuel tank, and outputs a detection signal;
a measured data generating means (S14) which generates measured data (D1) on the basis of the detection signal from said fuel nature detecting means;
a data transmission means (S15, 122) which transmits said measured data which has been generated to said management device; and
an operational state restriction means (S34) which restricts the operation of said working machine or issues a warning, on the basis of control information received from said management device;
and said management device (12) comprises:
a reception means (311, S21) which receives said measured data (D1) transmitted from said data transmission means;
a discriminating means (313, S23) which discriminates whether or not fuel which has been supplied into said fuel tank is a predetermined fuel which is set in advance, on the basis of said measured data; and
a control information transmission means (315, S28) which transmits said control information to said working machine (10), on the basis of the result of discrimination by said discriminating means.

9. A fuel nature discriminating system for a working machine, comprising a plurality of working machines (10) and a management device (14) which are connected together via a communication network (17) so as to be capable of mutual communication, wherein:
each of said working machines (10) comprises:
a fuel tank (150) which supplies fuel to an engine (160);
a fuel nature detecting means (140) which detects the nature of fuel supplied into said fuel tank, and outputs a detection signal;
a discriminating means (1D, 100, S55) which discriminates whether or not fuel which has been supplied into said fuel tank is a predetermined fuel which is set in advance, on the basis of the detection signal from said fuel nature detecting means;
a warning means (S58) which restricts the operation of said working machine or issues a warning, if it has been decided by said discriminating means that the fuel supplied into said fuel tank is not said predetermined fuel; and
a result of discrimination transmission means (S56) which transmits the result of discrimination (D2) by said discriminating means to said management device;
and said management device (14) comprises:
a reception means (411, S41) which receives said result of discrimination (D2) transmitted from said data transmission means; and
a storage means (S42) which accumulates in a database said results of discrimination which have been received by said reception means.

10. A fuel nature discriminating system for a working machine according to Claim 9, wherein said management device (14) further comprises a database (422) for managing the user or the operator of each of said working machines, and an evaluation updating means (412) which updates evaluations, provided within said database and related to the fuels which are used, on the basis of said results of discrimination.

11. A fuel nature discriminating system which discriminates the nature of fuel supplied to an engine (6, 160) of a working machine (10), comprising:
said working machine (10);
a fuel tank (2, 150) which supplies fuel to said engine;
a fuel nature detecting means (1B, 140) which detects the nature of fuel supplied into said fuel tank, and outputs a detection signal;
a remaining amount of fuel detecting means (1E,142) which detects the amount of fuel remaining within said fuel tank, and outputs a detection signal; and
a supplied amount calculation means (S55) which, if it has been decided by said fuel nature detecting means that fuel which has been supplied into said fuel tank is not a predetermined fuel which has been set in advance, calculates and compares together the remaining amount of fuel before fuel supply and the remaining amount of fuel after fuel supply on the basis of the detection signal from said remaining amount of fuel detecting means, and calculates the amount of fuel which has been supplied.

12. A fuel nature discriminating system for a working machine, comprising a plurality of working machines (10) and a management device (12, 14) which are connected together via a communication network (17) so as to be capable of mutual communication, wherein:
each of said working machines (10) comprises:
a fuel tank (150) which supplies fuel to an engine (160);
a fuel nature detecting means (140) which detects the nature of fuel supplied into said fuel tank, and outputs a detection signal;
a remaining amount of fuel detecting means (142) which detects the amount of fuel remaining within said fuel tank, and outputs a detection signal; and
a supplied amount calculation means (S55) which, if it has been decided by said fuel nature detecting means that fuel which has been supplied into said fuel tank is not a predetermined fuel which has been set in advance, calculates and compares together the remaining amount of fuel before fuel supply and the remaining amount of fuel after fuel supply on the basis of the detection signal from said remaining amount of fuel detecting means, and calculates the amount of fuel which has been supplied; and
a transmission means (S56) which transmits the supplied fuel amount calculated by said supplied amount calculation means to said management device;
and said management device (12, 14) comprises:
a reception means (S61) which receives said supplied fuel amount transmitted from each of said working machines;
a database (422) for managing the user or the operator of each of said working machines; and
an evaluation updating means (412) which updates evaluations, provided within said database and related to the fuels which are used, on the basis of said results of discrimination.

13. A fuel nature discriminating system for a working machine, comprising a working machine (10) and a management device (12) which are connected together via a communication network (17) so as to be capable of mutual communication, wherein:
said working machine (10) comprises:
a fuel tank (150) which supplies fuel to an engine (160);
a fuel nature detecting means (140) which detects the nature of fuel supplied into said fuel tank, and outputs a detection signal;
a remaining amount of fuel detecting means (142) which detects the amount of fuel remaining within said fuel tank, and outputs a detection signal;
a measured data generating means (S14) which generates measured data (D1) on the basis of the detection signal from said fuel nature detecting means and the detection signal from said remaining amount of fuel detecting means;
a data transmission means (S15, 122) which transmits said measured data which has been generated to said management device; and
a working machine operation restriction means (S34) which restricts the operation of said working machine, on the basis of control information received from said management device;
and said management device (12) comprises:
a reception means (311, S21) which receives said measured data (D1) transmitted from said data transmission means;
a discriminating means (313, S23) which discriminates whether or not fuel which has been supplied into said fuel tank is a predetermined fuel which is set in advance, on the basis of said measured data; and
a transmission control means (315, S28) which transmits said control information to said working machine (10), on the basis of the result of discrimination by said discriminating means.

14. A fuel nature discriminating system for a working machine, comprising a working machine (10) and a management device (12) which are connected together via a communication network (17) so as to be capable of mutual communication, wherein:
said working machine (10) comprises:
a fuel tank (150) which supplies fuel to an engine (160);
a fuel nature detecting means (140) which detects the nature of fuel supplied into said fuel tank, and outputs a detection signal;
a remaining amount of fuel detecting means (142) which detects the amount of fuel remaining within said fuel tank, and outputs a detection signal;
a discriminating means (S55) which discriminates whether or not fuel which has been supplied into said fuel tank is a predetermined fuel which is set in advance, on the basis of the detection signal from said fuel nature detecting means and the detection signal from said remaining amount of fuel detecting means;
a warning means (S58) which issues a warning, if it has been decided by said discriminating means that the fuel supplied into said fuel tank is not said predetermined fuel; and
a result of discrimination transmission means (S56) which transmits the result of discrimination (D2) by said discriminating means to said management device;
and said management device (12) comprises:
a reception means (311, S61) which receives said result of discrimination (D2) transmitted from said result of discrimination transmission means; and
a transmission control means (S63, S64) which, if the proportion of the fuel other than said predetermined fuel, included in the remaining amount of fuel within said fuel tank, is greater than a predetermined value, transmits control information to said working machine for restricting the output of said engine.

15. A fuel nature discriminating system for a working machine according to any one of Claims 1 through 7, further comprising a user evaluation updating means (11, 412, S43) which updates an evaluation relating to the user of said working machine, on the basis of said discrimination result.

16. A fuel nature discriminating system for a working machine according to any one of Claims 1 through 3, further comprising an anomaly detecting means (S77) which detects the occurrence of an anomaly condition, if no detection signal which indicates the existence of said fuel is outputted from said fuel nature detecting means even though the remaining amount of fuel within said fuel tank is increased.

17. A fuel nature discriminating method which discriminates the nature of fuel supplied to an engine (6, 160) of a working machine (10), wherein are executed:
a step (S11, S51, S71, S81) of detecting whether or not a predetermined detection timing, which has been set in advance, has arrived;
a step (S13, S53, S74, S93) of, when said predetermined detection timing has arrived, detecting the nature of fuel which is supplied into a fuel tank (2, 150);
a step (S23, S55) of discriminating, on the basis of said fuel nature which has been detected, whether or not said fuel is a predetermined fuel which is determined in advance; and
a step (S28, S34, S64) of restricting the operation of said working machine, if said result of discrimination is that it has been decided that said fuel supplied into said fuel tank is not said predetermined fuel.
